# EUROPÄISCHE PATENTSCHRIFT

(11) **EP 0 454 014 B1**
(45) Veröffentlichungstag und Bekanntmachung des Hinweises auf die Patenterteilung: **23.02.1994**
(21) Anmeldenummer: 91106414.5
(22) Anmeldetag: 22.04.1991
(51) Int. Cl.: H05K 5/06, H05K 7/20

(54) **Elektronisches Installationsgerät**
Electronic installation apparatus
Appareil d'installation électronique

(30) Priorität: 26.04.1990 DE 9004684 U
(43) Veröffentlichungstag der Anmeldung: 30.10.1991
(73) Patentinhaber: ABB PATENT GmbH, 68309 Mannheim (DE)
(72) Erfinder: Zapp, Robert, W-5885 Schalksmühle (DE); Stumpf, Heinrich, W-5885 Schalksmühle 3 (DE)
(74) Vertreter: Rupprecht, Klaus, Dipl.-Ing.

(56) Entgegenhaltungen:
- EP-A- 0 326 812
- DE-C- 2 902 169
- RESEARCH DISCLOSURE Bd. 275, Nr. 38, März 1987, NY,USA Seite 149; T.J.FRY: 'water impervious vent for electrical and similar equipment'

## Beschreibung

Die Erfindung betrifft ein elektronisches Installationsgerät, insbesondere einen Passiv-Infrarot-Bewegungsmelder nach dem Oberbegriff des Anspruchs 1.

Eine Elektronik aufweisende, elektronische Installationsgeräte sind herkömmlicherweise mit einem spritzwassergeschützten Gehäuse ausgestattet, welches in ausreichendem Maße Schutz gegen eindringendes Spritzwasser bietet. Gleichwohl müssen derartige spritzwassergeschützte elektronische Geräte gemäß VDE-Vorschrift 0632 zum Entwässern mit einer Öffnung versehen sein, damit im Gehäuseinnenraum gebildetes Kondenswasser ablaufen kann.

Bei bestimmten elektronischen Installationsgeräten, wie z.B. mit pyroelektrischen Temperatursensoren nebst Auswerteelektronik ausgestatteten Passiv-Infrarot-Bewegungsmeldern führen derartige Öffnungen durch eindringenden Wind zu Fehlschaltungen. Hier schafft die Erfindung Abhilfe.

Es ist demnach Aufgabe der Erfindung, ausgehend vom vorbekannten Stand der Technik und unter Vermeidung vorgenannter Nachteile, ein eine Öffnung aufweisendes spritzwassergeschütztes Gehäuse elektronischer Installationsgeräte derart weiterzubilden, daß einerseits zwar Kondenswasser abfließen, andererseits aber Wind nicht eindringen kann.

Diese Aufgabe wird durch die im Anspruch 1 näher gekennzeichneten Merkmale gelöst. Vorteilhafte Ausführungsformen der Erfindung sind in den Unteransprüchen näher gekennzeichnet.

Erfindungsgemäß ist vorgesehen, daß die Entwässerungs- und Belüftungsöffnung mit einem einerseits spritzwasser- und windabweisenden, andererseits aber kondenswasser- und gasdurchlässigen Werkstoff verschlossen ist. In vorteilhafterweise ist als Werkstoff ein Faservlies oder ein Filz vorgesehen. Es können aber auch Poren aufweisende Kunststoffschäume, insbesondere Polyurethanschäume verwendet werden. Hierdurch wird vorteilhafterweise nicht nur ermöglicht, daß im Gehäuseinneren gebildetes Kondenswasser über eine erdbodenseitig angeordnete Entwässerungs- und Belüftungsöffnung nach außen abfließen kann, sondern es wird auch noch ein einer Kondenswasserbildung entgegenwirkender Gasaustausch (Luft, Wasserdampf) zwischen dem Gehäuseinnern und der Gehäuseumgebung ermöglicht. Überdies wird gewährleistet, daß Spritzwasser, welches in die im Stand der Technik bekannte Öffnung - wenn auch im geringen Maße - nach wie vor eindringen könnte, durch den erfindungsgemäß ausgebildeten und angebrachten Werkstoff am Eindringen ins Gehäuseinnere gehindert wird. Insbesondere aber wird das Eindringen von Wind in das Gehäuseinnere weitgehend verhindert, was für das einwandfreie Funktionieren von Passiv-Infrarot-Bewegungsmeldern erforderlich ist. Wind, d.h. strömende Luft, hat nämlich die Wirkung, daß von ihm überstrichene Flächen, wie z.B. pyroelektrische Infrarotdetektoren sich kurzzeitig abkühlen, was daraufhin zu einer Fehlschaltung eines Passiv-Infrarot-Bewegungsmelders führen kann.

Die erfindungsgemäße Spritzwasser- und Windsperre wird zweckmäßigerweise durch einen in Folien- oder Lappenform ausgebildeten und über die Entwässerungs- und Belüftungsöffnung gelegten Werkstoff aus Faservlies, Filz oder Kunststoffschaum erreicht.

Der Werkstoff kann aber auch in Pfropfenform ausgebildet sein, so daß er in die Entwässerungs- und Belüftungsöffnung eingeklemmt werden kann.

Zweckmäßig ist es auch, den Werkstoff in Form eines Pilzes, der in die Entwässerungs- und Belüftungsöffnung eingerastet werden kann, auszubilden.

Ausführungsformen der Erfindung sollen nunmehr anhand der schematischen Zeichnungen näher beschrieben und erläutert werden. Es zeigt:
- Fig. 1: eine Ansicht auf die dem Erdboden zugekehrte Gehäuseunterseite 3 nebst Entwässerungs- und Belüftungsöffnung 4 eines an einer Hauswand installierten Passiv-Infrarot-Bewegungsmelders 1;
- Fig. 2: ein erstes Ausführungsbeispiel einer erfindungsgemäß ausgebildeten Spritzwasser- und Windsperre;
- Fig.3: ein zweites Ausführungsbeispiel einer erfindungsgemäß ausgebildeten Spritzwasser- und Windsperre;
- Fig. 4: ein drittes Ausführungsbeispiel einer erfindungsgemäß ausgebildeten Spritzwasser- und Windsperre.

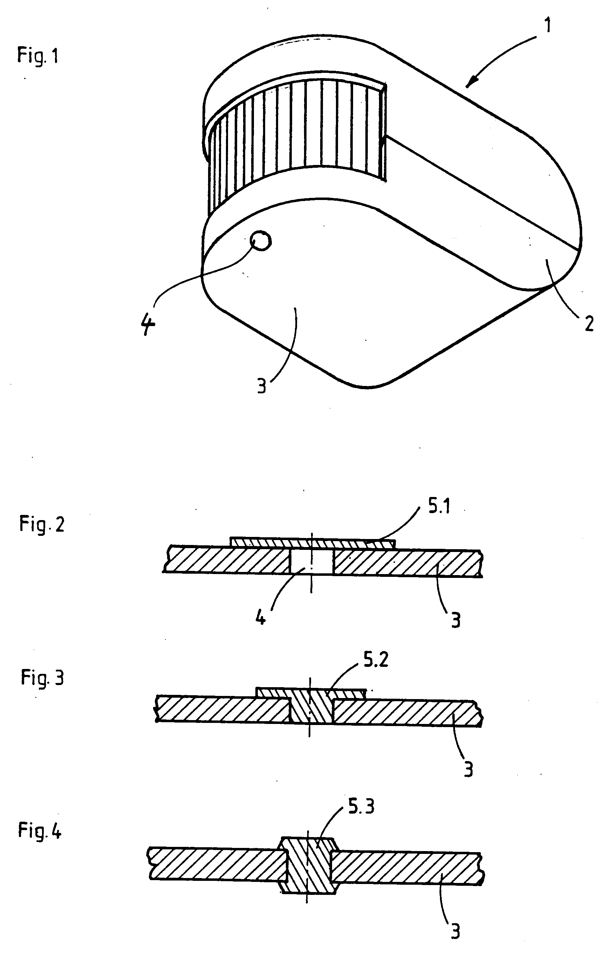

Fig. 1 zeigt einen an einer Hauswand installierten Passiv-Infrarot-Bewegungsmelder 1 mit einem Gehäuse 2 nebst einer dem Erdboden zugekehrten Gehäuseunterseite 3. In der Gehäuseunterseite 3 ist eine Entwässerungs- und Belüftungsöffnung 4 angebracht, welche sowohl den Abfluß von im Gehäuseinnern gebildeten Kondenswasser als auch den Gasaustausch (Luft, Wasserdampf) zwischen dem Gehäuseinnern und der Gehäuseumgebung ermöglicht.

Fig. 2 zeigt einen Querschnitt durch die Entwässerungs- und Belüftungsöffnung 4 der Gehäuseunterseite 3, welche mit einem in Folien- oder Lappenform 5.1 ausgebildeten Werkstoff, vorzugsweise Faservlies, Filz oder Polyurethanschaum verschlossen ist. Der in Folien- oder Lappenform 5.1 ausgebildete Werkstoff 5 ist über die Öffnung 4 gelegt und dort entweder angeklebt oder mechanisch befestigt.

Fig. 3 zeigt ebenfalls einen Querschnitt durch die Gehäuseunterseite 3 nebst der Entwässerungs- und Belüftungsöffnung 4, die vorliegend mit einem in Pfropfenform 5.2 ausgebildeten Werkstoff 5 verschlossen ist, der in die Entwässerungs- und Belüftungsöffnung 4 eingeklemmt ist.

Fig. 4 zeigt eine weitere Ausführungsform der Erfindung, bei welcher in die Entwässerungs- und Belüftungsöffnung 4 ein in Pilzform 5.3 ausgebildeter Werkstoff 5 eingerastet ist.

## Patentansprüche

1. Elektronisches Installationsgerät, insbesondere Passiv-Infrarot-Bewegungsmelder (1), mit einem spritzwassergeschützten Gehäuse (2) und mit mindestens einer in einer Gehäuseunterseite (3) angeordneten Entwässerungs- und Belüftungsöffnung (4), dadurch gekennzeichnet, daß die Entwässerungs- und Belüftungsöffnung (4) mit einem einerseits spritzwasser- und windabweisenden, andererseits aber kondenswasser- und gasdurchlässigen Werkstoff (5) verschlossen ist.

2. Elektronisches Installationsgerät nach Anspruch 1, dadurch gekennzeichnet, daß als Werkstoff (5) ein Faservlies oder Filz vorgesehen ist.

3. Elektronisches Installationsgerät nach Anspruch 1, dadurch gekennzeichnet, daß als Werkstoff (5) ein Kunststoffschaum, insbesondere Polyurethanschaum vorgesehen ist.

4. Elektronisches Installationsgerät nach einem der vorhergehenden Ansprüche, dadurch gekennzeichnet, daß der über die Entwässerungs- und Belüftungsöffnung (4) zu legende Werkstoff (5) in Folien- oder Lappenform (5.1) ausgebildet ist.

5. Elektronisches Installationsgerät nach einem der Ansprüche 1 bis 3, dadurch gekennzeichnet, daß der in die Entwässerungs- und Belüftungsöffnung (4) zu klemmende Werkstoff (5) in Pfropfenform (5.2) ausgebildet ist.

6. Elektronisches Installationsgerät nach einem der Ansprüche 1 bis 3, dadurch gekennzeichnet, daß der in der Entwässerungs- und Belüftungsöffnung (4) zu verrastende Werkstoff (5) in Pilzform (5.3) ausgebildet ist.

## Claims

1. Electronic installation device, in particular a passive infrared motion detector (1), having a splash-proof housing (2) and having at least one drain and ventilation opening (4) arranged in a housing underside (3), characterized in that the drain and ventilation opening (4) is sealed by means of a material (5) which on the one hand repels splashwater and wind but on the other hand is permeable to condensed water and gas.

2. Electronic installation device according to Claim 1, characterized in that a nonwoven or felt is provided as the material (5).

3. Electronic installation device according to Claim 1, characterized in that a plastic foam, in particular polyurethane foam, is provided as the material (5).

4. Electronic installation device according to one of the preceding claims, characterized in that the material (5) to be laid over the drain and ventilation opening (4) is constructed in the form of a foil or flap (5.1).

5. Electronic installation device according to one of Claims 1 to 3, characterized in that the material (5) to be clamped into the drain and ventilation opening (4) is constructed in the form of a stopper (5.2).

6. Electronic installation device according to one of Claims 1 to 3, characterized in that the material (5) to be latched in the drain and ventilation opening (4) is constructed in the form of a mushroom (5.3).

## Revendications

1. Appareil d'installation électronique, notamment détecteur de mouvement (1) passif à infrarouge, comportant un boîtier (2) protégé contre les projections d'eau et au moins une ouverture (4) d'évacuation d'eau et d'aération disposée dans une face inférieure (3) du boîtier, caractérisé par le fait que l'ouverture (4) d'évacuation d'eau et d'aération est fermée par un matériau (5) qui, d'un côté, repousse l'eau projetée et le vent et, d'un autre côté, laisse passer l'eau de condensation et le gaz.

2. Appareil d'installation électronique selon la revendication 1, caractérisé par le fait qu'il est prévu comme matériau (5) un tissus non-tissé ou du feutre.

3. Appareil d'installation électronique selon la revendication 1, caractérisé par le fait qu'il est prévu comme matériau (5) une mousse de matière plastique, en particulier de la mousse de polyuréthane.

4. Appareil d'installation électronique selon l'une des revendications précédentes, caractérisé par le fait que le matériau (5) à disposer au-dessus de l'ouverture (4) d'évacuation d'eau et d'aération est agencé sous forme de film ou de languette (5.1).

5. Appareil d'installation électronique selon l'une des revendications 1 à 3, caractérisé par le fait que le matériau (5) à enfoncer dans l'ouverture (4) d'évacuation d'eau et d'aération est agencé sous forme de bouchon (5.2).

6. Appareil d'installation électronique selon l'une des revendications 1 à 3, caractérisé par le fait que le matériau (5) à encliqueter dans l'ouverture (4) d'évacuation d'eau et d'aération est agencé sous forme de champignon (5.3).
